(19)

Europäisches
Patentamt
European
Patent Office
Office européen
des brevets

(11) **EP 4 455 344 A1**

(12) **EUROPEAN PATENT APPLICATION**
published in accordance with Art. 153(4) EPC

(43) Date of publication:
**30.10.2024 Bulletin 2024/44**

(21) Application number: **22911623.1**

(22) Date of filing: **14.11.2022**

(51) International Patent Classification (IPC):
*C22C 38/38* (2006.01)    *C22C 38/06* (2006.01)
*C22C 38/00* (2006.01)    *C22C 38/58* (2006.01)
*C22C 38/44* (2006.01)    *C22C 38/48* (2006.01)
*C22C 38/50* (2006.01)    *C22C 38/54* (2006.01)
*C21D 8/02* (2006.01)

(52) Cooperative Patent Classification (CPC):
**C21D 8/02; C22C 38/00; C22C 38/06; C22C 38/38;
C22C 38/44; C22C 38/48; C22C 38/50;
C22C 38/54; C22C 38/58**

(86) International application number:
**PCT/KR2022/017875**

(87) International publication number:
**WO 2023/120985 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.12.2021 KR 20210184705**

(71) Applicant: **POSCO Co., Ltd
Pohang-si, Gyeongsangbuk-do 37859 (KR)**

(72) Inventors:
• **LEE, Sea-Woong
Gwangyang-si, Jeollanam-do 57807 (KR)**

• **OH, Jin-Keun
Gwangyang-si, Jeollanam-do 57807 (KR)**
• **KIM, Seong-Woo
Gwangyang-si, Jeollanam-do 57807 (KR)**
• **KIM, Sang-Heon
Gwangyang-si, Jeollanam-do 57807 (KR)**
• **CHUN, Hyo-Sik
Gwangyang-si, Jeollanam-do 57807 (KR)**
• **LEE, Ru-Ri
Gwangyang-si, Jeollanam-do 57807 (KR)**

(74) Representative: **Meissner Bolte Partnerschaft
mbB
Patentanwälte Rechtsanwälte
Postfach 86 06 24
81633 München (DE)**

(54) **STEEL MATERIAL FOR HOT FORMING, HOT FORMED PART, AND METHOD FOR MANUFACTURING THEREOF**

(57)    The present invention relates to: a steel material for hot forming, used for a vehicle, etc.; a hot formed part; and a method for manufacturing thereof.

[FIG. 1]

[FIG. 1]

[FIG. 1]

FIG. 1A

EP 4 455 344 A1

**Description**

Technical Field

The present disclosure relates to a steel material for hot forming, used for a vehicle, etc., a hot formed part, and a method for manufacturing thereof.

Background Art

Recently, efforts have been made to improve fuel efficiency by reducing the weight of vehicles. To this end, a thickness of a steel material may be reduced, but when the thickness thereof is reduced, there may be a problem with the stability of a vehicle, and thus, strength enhancement of the steel material needs to be supported. For this reason, demand for a high-strength steel sheet continues to occur, and various types of steel material have been developed. However, because these steel materials have high strength, there may be a problem in that formability thereof is poor.

In order to solve this problem, a hot forming method called Hot Forming or Hot Press Forming (HPF) has been proposed. The hot forming method is a method of increasing the strength of a final product by forming a low-temperature structure of martensite in a steel material after processing the steel material at a high temperature suitable for processing and then rapidly cooling the steel material to a low temperature. In this case, the problem of formability may be minimized when manufacturing a member having high strength.

Patent Document 1 is a technology related to such hot forming. Patent Document 1 proposes a technology to secure ultra-high strength of 1,600 MPa or more in tensile strength by heating an Al-Si plated steel sheet at 850°C or more, and then forming a member structure into martensite by hot forming and rapid cooling by a press. For the technology proposed in Patent Document 1, since the steel sheet is molded at high temperature, it may be possible to easily mold a complex shape, and a weight reduction effect due to high strength may be expected through an increase in strength due to rapid cooling in a mold.

On the other hand, when a hot formed part used for passenger protection requires excellent durability, excellent fatigue characteristics are required as a representative indicator. For example, in the case of a vehicle B-pillar, after a long period of stress and deformation cycles are repeated, breakage may occur under a stress significantly lower than yield strength or tensile strength, and thus, characteristics (fatigue characteristic) capable of withstanding even over a specific cycle without breakage is required.

Fatigue characteristics, a major factor in determining the durability of a material, have been considered a characteristic required for steel, mainly applied to bearings and vehicle chassis in the meantime. However, with the recent increase in the strength of hot formed steel, the importance of fatigue characteristics continues to increase even in a steel material for hot forming or a member therefor applied to vehicle pillars.

Various methods for improving the fatigue characteristics have been proposed. For example, Patent Document 2 proposes a method of improving durability of a component by securing surface hardness through heat treatment after surface carbonization nitrification of a product. Patent Document 3 proposes a method of improving a fatigue lifespan of a material by performing a shot peening treatment on a surface of a product to form compressive residual stress on a surface layer.

However, the aforementioned method is applied after the product is molded, and when plating or the like is performed, surface quality may be impaired, and thus there is a limitation in that the aforementioned method may not be applied.

(Patent Document 1) U.S. Patent No. 6296805
(Patent Document 2) Korea Patent No. 10-1129370
(Patent Document 3) Korea Patent No. 10-0373280

Summary of Invention

Technical Problem

An aspect of the present disclosure is to provide a steel material for hot forming in which a hot formed part has high strength and simultaneously has excellent surface quality and fatigue properties, the hot formed part manufactured using the same, and a method for manufacturing the same.

The object of the present disclosure is not limited to the matters described above. An additional object of the present disclosure is described in the overall specification, and a person skilled in the art to which the present disclosure belongs will have no difficulty in understanding the additional object of the present disclosure from the content described in the specification of the present disclosure.

Solution to Problem

According to an aspect of the present disclosure, provided is a steel material for hot forming, comprising: a base steel sheet; and a plating layer formed on the base steel sheet,

wherein the base steel sheet comprises: by wt%, C: 0.04 to 0.45%, Si: 1.5% or less (excluding 0%), Mn: 0.2 to 2.5%, P: 0.05% or less, S: 0.02% or less, Al: 0.01 to 0.1%, Cr: 0.01 to 5.0%, N: 0.02% or less, residual Fe, and inevitable impurities, and
the following Relational Expression 1 is satisfied, [Relational Expression 1] **[0029]** Carbon segregation index before hot forming: $C_{(peak,\ before\ HPF)} / C_{(nom,\ before\ HPF)} \geq 1.5$

(where in Relational Expression 1, $C_{(peak,\ before\ HPF)}$ is the highest carbon value of a carbon peak that appears first in a carbon profile as a result of GDS analysis, in a direction of the base steel sheet from a 1/3 point of a thickness of the plating layer on a surface, and $C_{(nom,\ before\ HPF)}$ is a nominal carbon value of steel) .

According to another aspect of the present disclosure, provided is a method for manufacturing a steel material for hot forming, comprising:

obtaining a plated steel sheet using a steel slab comprising, by wt%, C: 0.04 to 0.45%, Si: 1.5% or less (excluding 0%), Mn: 0.2 to 2.5%, P: 0.05%, S: 0.02% or less, Al: 0.01 to 0.1%, Cr: 0.01 to 5.0%, N: 0.02% or less, residual Fe, and inevitable impurities; and
performing batch annealing on the plated steel sheet in a first operation manner of the following batch annealing condition 1,

[Batch Annealing Condition 1]

Temperature range (T1): 500 to 800°C
Retention time (t1): 1 minute or more (retention time at a target temperature)
Temperature increase velocity (H1): 20 to 160°C/hr (temperature increase velocity to a target temperature).

According to another aspect of the present disclosure, provided is a method for manufacturing a steel material for hot forming, comprising:

obtaining a plated steel sheet using a steel slab comprising, by wt%, C: 0.04 to 0.45%, Si: 1.5% or less (excluding 0%), Mn: 0.2 to 2.5%, P: 0.05% or less, S: 0.02% or less, Al: 0.01 to 0.1%, Cr: 0.01 to 5.0%, N: 0.02% or less, residual Fe, and inevitable impurities, and
performing batch annealing on the plated steel sheet in a second operation manner of the following batch annealing condition 2],

[Batch Annealing Condition 2]

Temperature range of section 1 (T2-1): 500 to 780°C
Retention time of section 1 (t2-1): 1 minute or more (retention time at a target temperature)
Temperature increase velocity of section 1 (H2-1): 20 to 160°C/hr (temperature increase velocity to a target temperature)
Temperature range of section 2 (T2-2): 600 to 800°C
Retention time of section 2 (t2-2): 50 minutes or more (retention time at a target temperature)
Temperature increase velocity of section 2 (H2-2): 0.25 to 160°C/hr (temperature increase velocity to a target temperature).

According to another aspect of the present disclosure, provided is a hot formed part comprising: a base material comprising, by wt%, C:0.0 to 0.45%, Si: 1.5% or less (excluding 0%), Mn:0.2 to 2.5%, P:0.05% or less, S:0.02% or less, Al: 0.01 to 0.1%, Cr: 0.01 to 5.0%, N:0.02% or less, residual Fe, and inevitable impurities; and a plating layer formed on the base material,

wherein conditions of the following Relational Expression 2 are satisfied,

$$[\text{Relational Expression 2}]$$

$$C_{(peak,\ after\ HPF)}\ /\ C_{(nom,\ after\ HPF)}\ \geq\ 0.1$$

(where in Relational Expression 2, $C_{(peak,\ after\ HPF)}$ is the highest carbon value of a carbon peak that appears first in a carbon profile as a result of GDS analysis in a direction of a base steel sheet from a 1/3 point of a thickness of a plating layer on a surface, and $C_{(nom,\ after\ HPF)}$ is a nominal carbon value of steel).

According to another aspect of the present disclosure, provided is a method for manufacturing a hot formed part, comprising:

obtaining a blank using the steel material for hot forming;
heating the blank to a temperature between an Ac3 temperature and 980°C and maintaining the blank for 1 to 1000 seconds; and
hot forming and cooling the heated and maintained blank.

Advantageous Effects of Invention

According to an aspect of the present disclosure, it may be possible to manufacture a hot formed part with excellent durability, having high strength after hot forming and simultaneously having excellent surface quality and fatigue characteristics. Accordingly, it may be possible to provide a steel material for hot forming, a hot formed part manufactured therefrom, and a method for manufacturing the same.

Advantages and effects of the present application are not limited to the foregoing content and may be more easily understood in the process of describing a specific example embodiment of the present disclosure.

Brief Description of Drawings

FIG. 1 is a graph illustrating a cross-sectional structure (a) of steel and a profile (b) of carbon as a result of a Glow Discharge Spectrometer (GDS) analysis performed to measure a $C_{peak}$ value before and after hot forming.
FIGS. 2A and 2B illustrate TEM images respectively obtained by observing cross-sections of Invention Example 1 and Comparative Example 1 after batch annealing heat treatment.
FIG. 3A and FIG. 3B illustrate optical microscope images respectively obtained by observing surfaces of Invention Example 2 and Comparative Example 7 after batch annealing heat treatment.

Best Mode for Invention

The terms used in the present specification are intended to describe the present disclosure and are not intended to limit the present disclosure. In addition, singular forms used in this specification comprise plural forms unless a relevant definition thereof indicates the opposite meaning.

The meaning of "comprise" used in the specification specifies the configuration and does not exclude the existence or addition of other configurations.

Unless otherwise defined, all terms comprising technical terms and scientific terms used in the present specification have the same meaning as those generally understood by those skilled in the art to which the present invention belongs. Pre-defined terms are interpreted to have meanings consistent with the relevant technical literature and the currently disclosed content.

First, an embodiment of a steel material for hot forming of the present disclosure will be described in detail. The steel material of the present disclosure may comprise, by wt%, C: 0.04 to 0.45%, Si: 1.5% or less (excluding 0%), Mn: 0.2 to 2.5%, P: 0.05% or less, S: 0.02% or less, Al: 0.01 to 0.1%, Cr: 0.01 to 5.0%, N: 0.02% or less, residual Fe, and inevitable impurities. Hereinafter, each alloy composition will be described in detail, wherein % denotes wt%.

Carbon (C): 0.04 to 0.45%

C is an essential element added to enhance the strength of a member. When the content of C is less than 0.04%, it may be difficult to ensure sufficient strength, and ultimately, even when the bendability is high, the collision energy absorption capacity of is rather reduced, and thus, effectively, the C may be added in the content of 0.04% or more. On the other hand, when the content of C exceeds 0.45%, the strength increases, but the bendability decreases, and the collision energy absorption capacity decreases, and thus, effectively, the C may be added in the content of 0.45% or less.

Silicon (Si): 1.5% or less (excluding 0%)

Si needs to be added as a deoxidant in steel manufacture and contributes to an increase in strength of a hot formed part, as a solid solution reinforcing element as well as a carbide generation inhibiting element, and is added as an effective element for material uniformity. When the content of Si is greater than 1.5%, plating properties may be degraded by Si oxide generated on a surface of a steel sheet during annealing. Accordingly, effectively, Si may be comprised in the content of 1.5% or less (excluding 0%).

Manganese (Mn): 0.2 to 2.5%

Mn needs to be added not only to ensure a solid solution strengthening effect, but also to suppress ferrite formation during hot forming by improving hardenability. When the content of Mn is less than 0.2%, there may be a limit to obtaining the above-described effect, and other expensive alloying elements may be excessively required to improve insufficient curing capacity, thereby significantly increasing manufacturing costs. On the other hand, when Mn is greater than 2.5%, cold rolling properties may be reduced due to an increase in the strength of the steel sheet before a hot forming process, and a band structure arranged in a rolling direction on a microstructure may be intensified, thereby reducing collision energy absorption capacity. Accordingly, effectively, the content of Mn may be 0.2 to 2.5%.

Phosphorus (P): 0.05% or less

P is present as an impurity in steel, and when the content thereof is greater than 0.05%, weldability of the hot formed part may be greatly degraded. On the other hand, P is an impurity inevitable for the manufacturing of a steel material, and a lower limit thereof may not be particularly limited, but in order to control the content of the P to be less than 0.001%, high manufacturing costs may be required, and thus, the content of the P may be 0.001% or more.

Sulfur (S): 0.02% or less

Since S is present as an impurity in steel and is an element that inhibits ductility, impact characteristics and weldability of the hot formed part, the S may be effectively limited to a maximum of 0.02%. On the other hand, as the S is an inevitable impurity, a lower limit thereof may not be particularly limited, but in order to control the content of the S to be less than 0.0001%, large manufacturing costs may be required, and thus, the content of the S may be 0.0001% or more.

Aluminum (Al): 0.01 to 0.1%

Al is an element that increases the cleanliness of steel through deoxidizing reaction in steel manufacture together with Si. When the content of Al is less than 0.01%, it may be difficult to obtain the effect, and when the content is greater than 0.1%, high-temperature ductility may be degraded due to excessive AlN formed during a continuous process to cause slab cracks. Therefore, effectively, the content of Al may be 0.01 to 0.1%.

Chromium (Cr): 0.01 to 5.0%

Cr is added to secure hardenability of steel, such as Mn, and to secure a beautiful surface during a HPF process. When the content of Cr is less than 0.01%, it may be difficult to secure sufficient hardenability. On the other hand, when the content of Cr is greater than 5.0%, an effect of improving the hardenability compared to an addition amount is insignificant, and the formation of coarse Cr-based carbide may be promoted to deteriorate collision energy absorption capacity thereof, and thus, it may be effective that the content of Cr does not exceed 5.0%.

Nitrogen (N): 0.02% or less

N is comprised as an impurity in steel. When the content of N is greater than 0.02%, slab cracks may easily occur due to AlN formation as in the case of Al. As N is an impurity, and a lower limit thereof is not particularly limited, in order to manage the content of the N to be less than 0.001%, high manufacturing costs may be required, and thus, the content of N may be 0.001% or more.

Meanwhile, a steel material may further comprise at least one of Mo: 0.5% or less, Ni: 0.5% or less, Nb: 0.1% or less, Ti: 0.1% or less, and B: 0.01% or less, in addition to the alloy components described above.

Molybdenum (Mo): 0.5% or less

Mo has an effect of improving hardenability of steel such as Cr and Mn, and may also obtain an effect of increasing bendability due to refining crystal grains through the formation of fine precipitates. However, when the content of Mo is greater than 0.5%, because excessive iron alloy cost increases as compared to the effect may be caused, it may be effective that the content of the Mo does not exceed 0.5%. The Mo content of 0.45% or less may be more effective, the content of 0.4% or less is far more effective, and the content of 0.35% or less is more effective.

Nickel (Ni): 0.5% or less

Ni is an austenite stabilizing element and may improve hardenability of steel through an addition of Ni. However, since Ni is an expensive alloy element, it may be effective to set an upper limit thereof to 0.5% in consideration of an increase in manufacturing costs compared to the effect of improving the hardenability. On the other hand, in order to sufficiently obtain the effect of improving the hardenability through the addition of Ni, the Ni content of at least 0.01% or more may be effectively comprised, the Ni content of 0.03% or more may be more effective, and the Ni content of 0.05% or more may be far more effective. An upper limit of the Ni may be, more effectively, 0.45%, the upper limit thereof may be, far more effectively, 0.4%, and the upper limit thereof may be, most effectively, 0.35%.

niobium (Nb): 0.1% or less

The Nb is an element capable of obtaining a precipitation enhancement effect through the formation of fine precipitates, and thus an effect of improving a bendability due to an increase in strength and refining crystal grains may be obtained. In addition, it may be possible to suppress excessive crystal grain growth during heating for hot forming, thereby enhancing robustness against condition variation in heat treatment conditions. However, when the content of the Nb exceeds 0.1%, the effect may be saturated, and relatively coarse precipitates may increase due to an increase in a precipitation temperature, and thus cost-efficiency may be reduced. Accordingly, the content of the Nb may be, effectively, 0.1% or less. A lower limit of the Nb content may be, effectively 0.005%, may be, more effectively 0.01%, and may be, far more effectively 0.015%. An upper limit of the Nb content may be, more effectively 0.09%, more effectively 0.08%, and may be, most effectively 0.07%.

Titanium (Ti): 0.1% or less

The Ti is an element which is added together when B is added to ensure hardenability by combining the Ti with nitrogen remaining as an impurity in steel to generate TiN. Furthermore, through the formation of TiC precipitates, precipitation enhancement and crystal grain refining may be expected. However, when the content of the Ti is greater than 0.1%, a large amount of coarse TiN may be formed to deteriorate the collision energy absorption capacity, and thus, an upper limit of the Ti may be effectively 0.1%. A lower limit of the Ti may be, effectively 0.005%, more effectively 0.01%, and far more effectively 0.015%. The upper limit of the Ti may be, effectively 0.08%, far more effective 0.06%, and most effectively 0.05%.

Boron (B): 0.01% or less

The B is an element which may improve hardenability even with a small amount of addition and may be segregated in a prior austenite grain boundary to effectively suppress brittleness of the hot formed part by grain boundary segregation of P and/or S. However, when the content is greater than 0.01%, because the formation of $Fe_{23}CB_6$ composite compounds causes brittleness in hot rolling, an upper limit thereof may be effectively 0.01%. On the other hand, a lower limit of the B content may be, effectively 0.0001%, more effectively 0.0003%, and far more effectively 0.0005%. An upper limit of the B content may be, more effectively 0.009%, far more effectively 0.007%, and mostly effectively 0.005%.

The rest comprises iron (Fe), and unintended impurities from the raw material or the surrounding environment may be inevitably mixed during a typical manufacturing process, and thus this may not be excluded. Since any person skilled in the art will know these impurities during the manufacturing process, all of them are not specifically mentioned in the present specification.

The steel material for hot forming comprises a plating layer on at least one surface. The plating layer is a zinc (Zn)-based plating layer, an aluminum (Al)-based plating layer, or the like, and a type of the plating layer is not particularly limited, and a method of forming a plating layer, such as melt plating or electroplating, is not particularly limited. In a preferred example, an Al-based plating layer may be formed. The Al-based plating is not particularly limited, but as an example, the Al-based plating layer may be a plating layer in which a plating layer formed after plating a plating bath comprising, by wt%, Si: 6 to 12%, Fe: 1 to 4% and the rest comprising Al and inevitable impurities is alloyed by subsequent batch annealing. That is, in the steel material, it may be difficult to regard the plating layer as a pure plating layer plated by the plating bath, and the plating layer may be regarded as a plating layer obtained by alloying a base steel sheet and a plating layer.

Effectively, the steel material for hot forming has a Surface Carbon Segregation Factor of 1.5 or more before hot forming, defined by the following Relational Expression 1.

[Relational Expression 1]

$$C_{(peak, \, before \, HPF)} \, / \, C_{(nom, \, before \, HPF)} \geq 1.5$$

(In Relational Expression 1, $C_{(peak, \, before \, HPF)}$ is the highest carbon value of a carbon peak that appears first in a carbon profile as a result of GDS analysis, in a direction of a base steel sheet from a 1/3 point of a thickness of a plating layer on a surface, and $C_{(nom, \, before \, HPF)}$ is a nominal carbon value of steel and usually refers to a target carbon content in the steel.)

The inventors of the present disclosure recognized that batch annealing was applied to a steel sheet for hot forming, surface properties after the batch annealing were observed, and surface properties and fatigue properties of a part after hot forming were observed, and as a result, when batch annealing conditions and surface properties of the steel sheet after the batch annealing are managed consistently, not only can the surface quality of the hot formed part be secured, but the fatigue properties can be improved.

Specifically, in order to improve fatigue characteristics to increase durability of the hot formed part, the Surface Carbon Segregation Factor of the steel material for hot forming, defined in the [Relational Expression 1] above may be effectively 1.5 or more.

A microstructure of a steel material for hot forming may comprise 50 to 90% by area of ferrite, and may comprise at least one of 30% by area or less of pearlite, 20% by area or less of bainite, and 20% by area or less of martensite.

The ferrite is an effective structure for reducing a blanking process load of a steel material when manufacturing blanks in a soft phase, and for this purpose, the ferrite may effectively have 50% by area or more. However, if the ferrite has more than 90% by area, there may be a possibility that carbon may be unevenly distributed even after the hot forming due to excessive distribution of carbon to structures other than ferrite during blank manufacturing. Therefore, the ferrite may effectively have 50 to 90% by area.

When the perlite has more than 30% by area, cementite may be incompletely dissolved after hot forming, to lead to a decrease in strength or to cause material non-uniformity. On the other hand, when each of bainite or martensite has 20% by area, the strength of a steel sheet may increase excessively, which may cause problems such as mold wear during blank manufacturing.

Meanwhile, the whiteness of the steel material for hot forming may be 60 or more. When a heat treatment of the batch annealing for alloying (pre-alloying) on a plating layer of the steel material of hot forming is excessively performed, a surface oxide may be excessively formed to result in poor whiteness so that the whiteness may be less than 60. When the surface quality is deteriorated, problems such as roll contamination may occur during hot forming, and accordingly, the batch annealing conditions to be described below may be effectively performed.

Next, an embodiment of a method for manufacturing a steel material for hot forming of the present disclosure will be described in detail. The manufacturing method described below is only one of all possible embodiments, and it does not mean that the steel material for hot forming must be manufactured only by the following manufacturing method.

A plated steel sheet is manufactured and obtained using a steel slab satisfying the above-described alloy composition, and the plated steel sheet is subject to batch annealing.

In order to secure a surface carbon segregation factor of 1.5 or more of a steel material before hot forming defined in [Relational Expression 1] described above, or secure a surface carbon segregation factor of 0.1 or more of a part after hot forming defined in [Relational Expression 2] described below, the batch annealing may be performed. The batch annealing may be performed in a one-step or a two-step, and accordingly, the conditions for the batch annealing are changed, and will be described in detail by dividing the conditions thereof into [Batch Annealing Condition 1] and [Batch Annealing Condition 2], respectively.

[Batch Annealing Condition 1]

Temperature range (T1): 500 to 800°C
Retention time (t1): 1 minute or more (retention time at a target temperature)
Temperature increase velocity (H1): 20 to 160°C/hr (temperature increase velocity to target temperature)

When the temperature increase velocity (H1) is less than 20°C/hr, a surface quality may be degraded by the formation of an oxide in a surface layer due to excessive heat treatment time, and when the temperature increase velocity (H1) is more than 160°C/hr, a surface quality may be degraded by a melting phenomenon of a plating layer due to overheating of an edge portion caused by a temperature deviation in a width direction. When the batch annealing is performed in the target temperature range T1 set to a temperature below 500°C, surface quality and fatigue characteristics may be degraded due to poor alloying of the plating layer and poor surface carbon segregation factor. On the other hand, when the target temperature range T1 is greater than 800°C, the surface quality may be deteriorated due to excessive alloying. In addition, it is effective for the retention time at the target temperature to be 1 minute or more, and when the retention time is less than 1 minute, there is a concern that an entire plating layer may not be alloyed. However, when the retention time is more than 100 hours, the surface quality may be deteriorated due to excessive alloying.

[Batch Annealing Condition 2]

Temperature range of section 1 (T2-1): 500 to 780°C
Retention time of section 1 (t2-1): 1 minute or more (retention time at a target temperature)
Temperature increase velocity of section 1 (H2-1): 20 to 160°C/hr (temperature increase velocity to a target temperature)
Temperature range of section 2 (T2-2): 600 to 800°C
Retention time of section 2 (t2-2): 50 minutes or more (retention time at a target temperature)
Temperature increase velocity of section 2 (H2-2): 0.25 to 160°C/hr (temperature increase velocity to a target temperature).

When the temperature increase velocity of the section 1 is less than 20°C/hr, the surface quality may be degraded due to excessive heat treatment time, and when the temperature increase velocity is greater than 160°C/hr, the surface quality may be degraded due to an occurrence of an edge melting phenomenon. When the temperature increase velocity of section 2 is less than 0.25°C/hr, the surface quality may be degraded due to an increase in surface oxides caused by excessive heat treatment, and when the temperature increase velocity of section 2 is greater than 160°C/hr, the surface quality may be degraded due to a melting phenomenon of an edge plating layer.

When the retention time at the target temperature section 1 is less than 1 minute, it may be difficult to satisfy a surface layer carbon enrichment index. However, an upper limit thereof is not particularly limited, but when the retention time exceeds 100 hours, the surface quality may be degraded due to excessive alloying, and process costs may be excessively increased. On the other hand, when the retention time at the target temperature in section 2 is less than 50 minutes, it may be difficult to satisfy the surface layer carbon enrichment index. However, an upper limit thereof is not particularly limited, but when the retention time exceeds 100 hours, the process costs may increase excessively, and the surface oxides may increase to degrade the surface quality.

On the other hand, it is effective for the target temperatures of section 1 and section 2 not to exceed 780°C and 800°C, respectively. When the target temperatures exceed the effective temperatures, surface whiteness due to excessive alloying may be less than 60, which may degrade the surface quality and may increase process costs excessively due to an increase in the amount of heat input. On the other hand, when the target temperatures of section 1 and second 2 are less than 500°C and 600°C, respectively, it may be necessary to maintain heat treatment for more than 100 hours for complete alloying during batch annealing, which may lead to excessive process costs due to surface quality degradation and an increase in input heat. The target temperature of section 2 is higher than the target temperature of section 1.

Purge gas in batch annealing furnace may be any one of hydrogen ($H_2$), nitrogen ($N_2$), and a mixture thereof, and a purge amount may be 0.1 to 100 $m^3$/hr. When the purge amount is less than 0.1 $m^3$/hr, an atmosphere in the batch annealing furnace may be not controlled to degrade the surface quality, and when the purge amount is more than 100 $m^3$/hr, the amount of heat input to maintain the temperature in the furnace increases, which may cause excessive manufacturing costs.

In addition, a circulation fan can be operated during the batch annealing, and in this case, effectively, an operation amount of the circulation fan may be 10 rpm or more. When the operation amount of the circulation fan is small and is less than 10 rpm, a melting phenomenon may occur due to temperature deviation in a width direction of a coil and overheating of an edge portion, which may degrade the surface quality. The amount of operation of the circulation fan should be as high as possible, which is determined according to the capability of the circulation fan motor, and thus an upper limit thereof is not particularly limited.

There are various methods for manufacturing a plated steel sheet, and for example, a steel slab satisfying the above-described composition range may be obtained through processes such as heating, hot rolling, winding, cooling, cold rolling, annealing, and plating. Hereinafter, each process will be described.

Heating of Steel Slab

The steel slab is heated at 1050 to 1300°C. When the heating temperature of the steel slab is less than 1050°C, not only is a structure of the steel slab difficult to homogenize, but it may also be difficult to resolve when precipitating elements are used. On the other hand, when the heating temperature is more than 1300°C, an excessive oxide layer may be formed to increase a possibility of causing surface defects after hot rolling. Accordingly, effectively, a steel slab heating temperature may be 1050 to 1300°C. A lower limit of the steel slab heating temperature may be, more effectively 1070°C, and far more effectively 1100°C. An upper limit of the steel slab heating temperature may be, more effectively 1280°C, and far more effectively 1250°C.

Hot Rolling

The heated steel slab is hot rolled and finish hot rolled at 800 to 950°C to obtain a hot-rolled steel sheet. When the finish hot rolling temperature is less than 800°C, a mixed structure of a surface layer of a steel sheet is generated due to two phase rolling, which may make it difficult to control a plate shape. On the other hand, when the finish hot rolling temperature is greater than 950°C, there may be a problem in that coarsening of crystal grains easily occurs due to hot rolling. Therefore, effectively, the finish hot rolling temperature may be 800 to 950°C. A lower limit of the finish hot rolling temperature may be, more effectively 810°C, and far more effectively 820°C. An upper limit of the finish hot rolling temperature may be, more effectively 940°C, and far more effectively 930°C.

Winding

The hot-rolled steel sheet is wound at 500 to 700°C. When a winding temperature is less than 500°C, martensite is formed entirely or partially, which may make it difficult to control a plate shape, and the strength of the hot-rolled steel sheet may increase, which may cause a problem of reducing rolling properties in a subsequent cold rolling process. On the other hand, when the winding temperature is greater than 700°C, a coarse carbide may be formed, which may reduce the collision energy absorption capacity of a hot formed part. Accordingly, effectively, the winding temperature may be 500 to 700°C. A lower limit of the winding temperature may be, more effectively 520°C, and far more effectively 550°C. An upper limit of the winding temperature may be, more effectively 680°C, and far more effectively 650°C.

Cooling

The wound hot-rolled steel sheet is cooled (hot-rolled cooling) at cooling velocity of 10°C/hr or more from the winding temperature to 400°C, and when the cooling velocity is less than 10°C/hr, due to sufficient time for the carbide to grow, a large number of coarse carbides may be formed during cooling of the hot rolled coil. Accordingly, the cooling velocity may be, effectively 10°C/hr or more, more effectively 12°C/hr or more, and far more effectively 15°C/hr or more. On the other hand, as long as the cooling velocity is 10°C/hr or more, because the effect to be obtained through the present disclosure may be obtained, an upper limit thereof is not particularly limited.

Meanwhile, after the cooling, a pickling process before cold rolling may be added. Through the pickling process, the surface quality of a product may be improved by removing a scale formed on the surface of the steel sheet.

Cold Rolling

After the process, the hot-rolled steel sheet is cold rolled to obtain a cold-rolled steel sheet. A reduction rate during the cold rolling is not particularly limited, but a reduction rate of 30 to 80% may be applied to obtain a target steel thickness.

Annealing and Cooling

The cold-rolled steel sheet is annealed, and to this end, the cold-rolled steel sheet is heated, and in this case, effectively, in a temperature range from 400°C to an annealing temperature, heating may be performed at a velocity of 20°C/s or less. When the heating velocity exceeds 20°C/s from 400°C to the annealing temperature, there may not be sufficient time for a carbonized material precipitated in a hot rolling operation to be reused and coarse carbonized material may remain, and collision energy absorption capacity of a finally obtained hot formed part may be reduced. Accordingly, effectively, the heating velocity from 400°C to the annealing temperature is 20°C/s or less. The heating velocity may be, more effectively 18°C/s or less, and far more effectively 15°C/s or less. On the other hand, in the present disclosure, as long as the heating velocity is 20°C/s or less, an effect desired by the present disclosure may be obtained, and thus, a lower limit of the heating velocity is not particularly limited. However, considering annealing productivity, the heating velocity may be 0.5°C/s or more, effectively 1°C/s or more, far more effectively 1.5°C/s or more. On the other hand, in the present disclosure, the heating velocity is not particularly limited in the temperature range from a cold rolling temperature to less than 400°C, and this is because even if the heating velocity is controlled, the effect of reusing carbide is insignificant.

Effectively, the heated cold-rolled steel sheet may be annealed at an annealing temperature of 740 to 860°C. When the annealing temperature is less than 740°C, because the steel sheet is cold-rolled, a structure may not be sufficiently recrystallized, resulting in poor plate shape or excessive strength after plating, which may cause mold wear during a blanking process. On the other hand, when the annealing temperature is greater than 860°C, a surface oxide such as Si, Mn, or the like may be formed during the annealing process to cause poor plating surface, so that the annealing temperature may be effectively 740 to 860°C. A lower limit of the annealing temperature may be, more effectively 750°C, and far more effectively 760°C. An upper limit of the annealing temperature may be, more effectively 850°C, and far more effectively 840°C.

It may be effective to set the annealing atmosphere to a non-oxidizing atmosphere. For example, a hydrogen-nitrogen mixed gas may be used, and in this case, a dew point of atmospheric gas may be -70 to -30°C. In order for the dew point temperature to be less than -70°C, additional facilities for control may be required, and manufacturing costs may increase, and when the dew point is greater than -30°C, during annealing, an annealed oxide is excessively formed on a surface of the steel sheet, which may cause defects such as non-plating. Accordingly, effectively, the dew point of the atmospheric gas during the continuous annealing may be -70 to -30°C. A lower limit of the dew point temperature of the atmospheric gas may be, more effectively -65°C, and far more effectively -60°C. An upper limit of the dew point temperature of the atmospheric gas may be, more effectively -35°C, and far more effectively - 40°C.

The annealed cold-rolled steel sheet is cooled (annealed cooling) at a cooling velocity of 1°C/s or more from an annealing temperature to 660°C. When the cooling velocity is less than 1°C/s, a large amount of coarse carbide may be formed to reduce the collision energy absorption capacity of a finally obtained hot formed part. Accordingly, effectively, the cooling velocity may be 1°C/s or more. The cooling velocity may be, more effectively, 1.5°C/s or more, and far more effectively 2°C/s or more. An upper limit of the cooling velocity is not particularly limited. However, in terms of suppressing the shape of the steel sheet, the cooling velocity may be 50°C/s or less, more effectively 45°C/s or less, and far more effectively 40°C/s or less.

Plating

Plating may be additionally performed on the annealed cold-rolled steel sheet. In the present disclosure, the type and method of the plating are not particularly limited, but an example of Al-based plating will be described. The plating cools the annealed cold-rolled steel sheet and is immersed in an Al-based plating bath to form an aluminum-based plating layer. The composition and plating conditions of the Al-based plating bath are not particularly limited.

However, in a non-limiting example, a composition of the plating bath may comprise, by wt%, Si: 6 to 12%, Fe: 1 to 4%, residual Al and other inevitable impurities, and a plating amount may be 30 to 130g/m$^2$ based on one side commonly applied in the pertinent art. When the Si content in the plating bath composition is less than 6 wt%, a temperature of the plating bath may be excessively increased to deteriorate the equipment, and when the Si content is greater than 12 wt%, the alloying is excessively delayed to increase the heating time for hot forming. When the Fe content is less than 1 wt%, plating adhesion or spot weldability may be degraded, and when the Fe content is greater than 4 wt%, a dross in the plating bath may excessively occur, which may cause surface quality defects. When the plating attachment amount is less than 30g/m² based on one side, it may be difficult to secure the corrosion resistance of a desired hot formed part, and when the plating attachment amount is greater than 130g/m², manufacturing costs may increase due to excessive plating attachment, and also, it may not be easy to uniformly plating the plating amount on the steel sheet in a full width and longitudinal direction of a coil.

On the other hand, according to another aspect of the present disclosure, as described above, continuous annealing and plating may be performed on the cold-rolled steel sheet, but plating may be performed immediately after pickling the cooled hot-rolled steel sheet.

Next, an embodiment of the hot formed part of the present disclosure will be described in detail. The hot formed part of the present disclosure may be manufactured by hot press-forming the above-described steel material for hot forming.

Effectively, the heat formed part comprises a base material and a plating layer formed on the base material, and has a surface carbon segregation factor of 0.1 or more after hot forming, defined by the following Relational Expression 2.

$$[\text{Relational Expression 2}]$$

$$C_{(\text{peak, after HPF})} \, / \, C_{(\text{nom, after HPF})} \geq 0.1$$

(In Relational Expression 2, $C_{(\text{peak, after HPF})}$ is the highest carbon value of a carbon peak that appears first in a carbon profile as a result of GDS analysis in a direction of a base steel sheet from a 1/3 point of a thickness of a plating layer on a surface, and $C_{(\text{nom, after HPF})}$ is a nominal carbon value of steel.)

The hot formed part may secure excellent surface quality and fatigue resistance by satisfying the Surface Carbon Segregation Factor of 0.1 or more after the hot forming. It may be effective that the Surface Carbon Segregation Factor after hot forming defined by the [Relational Expression 2] does not exceed 1.0.

The surface carbon segregation factor before hot forming, defined by Relational Expression 1 above, may be effectively larger than the surface carbon segregation factor after hot forming, defined by Relational Expression 2 above ([Relational Expression 1]> [Relational Expression 2]).

On the other hand, $C_{(\text{nom, after HPF})}$ is a nominal carbon value of steel, which may be seen as having little difference before and after hot forming. Accordingly, in some descriptions, the carbon value does not distinguish between before and after HPF and are described as $C_{\text{nom}}$.

A base material of the hot formed part satisfies the above-described alloy composition. On the other hand, a microstructure of the base material may have a martensite single-phase structure or a mixed structure containing martensite and bainite of 40% by area. Since the martensite is an effective structure for securing the strength targeted by the present disclosure, the microstructure of the part may be a martensite single-phase structure. On the other hand, although bainite is a somewhat less intense structure than martensite, the bainite does not significantly reduce bendability thereof when formed within a martensite matrix and is advantageous for securing the strength, and accordingly, the present disclosure may have a mixed structure comprising bainite of 40% by area or less along with the martensite. However, when a fraction of the bainite exceeds 40% by area, it may be difficult to secure the strength targeted by the present invention.

Meanwhile, the microstructure may further comprise at least one of 10% by area or less of ferrite and 5% by area or less of residual austenite. The ferrite and the residual austenite may be inevitably formed in the manufacturing process. When the ferrite structure exceeds 10% by area, strength thereof may be reduced and bending properties thereof may be greatly degraded, and when the residual austenite structure exceeds 5% by area, strength thereof may be reduced or inflow of hydrogen from the atmospheric gas during hot forming may increase, which may increase the possibility of an occurrence of hydrogen brittleness.

A plating layer of the hot formed part denote a plating layer obtained after hot forming with respect to the plating layer of the above-described steel material.

The hot formed part may have a fatigue limit improvement of 5% or more. The fatigue limit improvement denotes an improvement rate of the fatigue limit compared to a material not comprising surface layer carbon enrichment because pre-alloying is not performed. The fatigue limit improvement may be confirmed in a tensile-compressed fatigue test. When the fatigue limit improvement is 5% or more, durability thereof may be improved even in similar tensile properties.

Next, an embodiment of a method of manufacturing a hot formed part of the present disclosure will be described in detail. A manufacturing method described below is only one of all possible embodiments, and it does not mean that the hot formed part should be manufactured only by the following manufacturing method.

The aforementioned steel material for hot forming or a steel material for hot forming manufactured by the aforementioned method are prepared, this is used to manufacture a blank, and the blank is heated at a austenite single-phase temperature or more, more specifically a temperature between an Ac3 temperature and 980°C, and then the blank is maintained for 1 to 1000 seconds.

When the blank heating temperature is less than an Ac3 temperature, it may be difficult to ensure a predetermined strength due to the presence of non-transformed ferrite. On the other hand, when the heating temperature exceeds 980°C, it may be difficult to secure spot weldability due to excessive oxide generation on a surface of the part. Accordingly, effectively, the blank heating temperature may be Ac3 to 980°C. A lower limit of the blank heating temperature may be, more effectively Ac3+5°C, and far more effectively Ac3+10°C. An upper limit of the blank heating temperature may be, more effectively 970°C, and far more effectively 960°C.

When the retention time is less than 1 second, the temperature may not be uniformized over an entire blank, and thus a material difference of each part may be caused, and when the retention time exceeds 1000 seconds, it may be difficult to ensure spot weldability due to excessive oxide generation on a surface of the part, similarly to an excessive heating temperature. Accordingly, effectively, the retention time may be 1 to 1000 seconds. A lower limit of the retention time may be, more effectively 30 seconds, and far more effectively 60 seconds. An upper limit of the retention time may be, more effectively 900 seconds, and far more effectively 800 seconds.

Then, the heated and maintained blank is hot-formed and then cooled to room temperature (molding and cooling) to finally manufacture a hot formed part. There is no particular limitation on specific conditions during the hot forming, and a hot forming method commonly known in the art to which the present disclosure pertains may be applied unchangeably. In a preferred example, a mold cooling method may be used.

Mode for Invention

Next, embodiments of the present disclosure will be described.

Those skilled in the art will understand that the following examples can be modified in various ways without departing from the scope of the present disclosure. Therefore, the following examples are for understanding the present disclosure, and the scope of the present disclosure should not be limited to the following embodiment and should be determined by the claims described below as well as those equivalent to the claims.

(Example)

A steel slab having a thickness of 100 mm having a composition (wt% and the rest being Fe and inevitable impurities) of Table 1 below was prepared through vacuum dissolution.

After heating the steel slab to 1250°C, the steel slab was hot rolled at a finish hot rolling temperature of 900°C, and wound at a winding temperature of 640°C to prepare a hot-rolled steel sheet with a final thickness of 2.5 mm. After pickling the hot-rolled steel sheet, cold rolling was performed at a cold reduction rate of 45%, thereby manufacturing a cold-rolled steel sheet. After performing annealing at a temperature of 780°C, which is a typical annealing temperature under a 5% hydrogen-95% nitrogen atmosphere, the cold-rolled steel sheet was cooled and then Al-based plating was performed thereon.

In this case, an Al-based plating bath composition consists of Al-9%Si-2%Fe and the rest of the inevitable impurities, and a plating adhesion amount was set to 70g/m$^2$ based on one side.

A surface layer of the plated steel plate was subjected to the batch annealing treatment for carbon enrichment, and the batch annealing treatment was performed using a one-step manner or a two-step manner according to a type of process, and the specific conditions are shown in Table 2 below.

Table 1:

| Steel Type | C | Si | Mn | P | S | Al | Cr | Mo | N | Ti | B |
|---|---|---|---|---|---|---|---|---|---|---|---|
| A | 0.09 | 0.24 | 0.90 | 0.01 | 0.00 | 0.04 | 0.15 | 0.03 | 0.00 | 0.07 | - |
| B | 0.22 | 0.26 | 1.15 | 0.01 | 0.00 | 0.04 | 0.19 | - | 0.00 | 0.22 | 0.0027 |
| C | 0.31 | 0.40 | 0.87 | 0.01 | 0.00 | 0.03 | 0.23 | 0.16 | 0.00 | 0.03 | 0.0021 |
| D | 0.34 | 0.15 | 1.28 | 0.01 | 0.00 | 0.03 | 0.14 | 0.09 | 0.00 | 0.03 | 0.0020 |

EP 4 455 344 A1

Table 2:

| Division | Stee 1 Type | Purge Gas | Gas Flow Rate (m³/ hr) | Circulati on fan rpm | One-Step Batch Annealing Application | | | Two-Step Batch Annealing Application | | | | | |
|---|---|---|---|---|---|---|---|---|---|---|---|---|---|
| | | | | | H1 (°C /hr ) | T1 (°C) | t1 (minu te) | H2-1 (°C /hr) | T2-1 (°C) | t2-1 (minu te) | H2-2 (°C /hr) | T2-2 (°C) | t2-2 (mi nute) |
| Comparative Example 1 | A | - | - | - | - | - | - | - | - | - | - | - | - |
| Comparative Example 2 | A | $H_2$ | 15 | 100 | 30 | 450 | 20 | - | - | - | - | - | - |
| Comparative Example 3 | A | $H_2$ | 15 | 100 | 10 | 550 | 120 | - | - | - | - | - | - |
| Comparative Example 4 | A | $H_2$ | 0 | 500 | - | - | - | 50 | 550 | 50 | 15 | 700 | 50 |
| Inventive Example1 | A | $H_2$ | 15 | 500 | - | - | - | 50 | 550 | 50 | 15 | 700 | 50 |
| Comparative Example 5 | B | - | - | - | - | - | - | - | - | - | - | - | - |
| Comparative Example 6 | B | $H_2$ | 0 | 1500 | 30 | 780 | 300 | - | - | - | - | - | - |
| Inventive Example2 | B | $H_2$ | 15 | 1500 | 30 | 780 | 300 | - | - | - | - | - | - |
| Comparative Example 7 | B | $H_2$ | 25 | 1000 | - | - | - | 175 | 650 | 300 | 30 | 700 | 60 |
| Inventive Examples | B | $H_2$ | 25 | 1000 | - | - | - | 150 | 650 | 300 | 30 | 700 | 120 |
| Comparative Example 8 | B | $H_2$ | 25 | 50 | - | - | - | 150 | 650 | 300 | 185 | 700 | 120 |
| Comparative Example 9 | B | $H_2$ | 80 | 5 | - | - | - | 30 | 650 | 300 | 30 | 720 | 50 |
| Inventive Example4 | B | $H_2$ | 80 | 50 | - | - | - | 30 | 550 | 120 | 30 | 720 | 50 |
| Comparative Example 10 | C | - | - | - | - | - | - | - | - | - | - | - | - |
| Inventive Examples | C | $N_2$ | 25 | 2000 | 30 | 740 | 120 | - | - | - | - | - | - |
| Comparative Example 11 | C | $N_2$ | 25 | 2000 | 170 | 740 | 120 | - | - | - | - | - | - |
| Comparative Example 12 | C | $N_2$ | 25 | 1200 | 30 | 450 | 120 | - | - | - | - | - | - |
| Inventive Example6 | C | $N_2$ | 15 | 1200 | - | - | - | 30 | 650 | 300 | 30 | 720 | 60 |
| Comparative Example 13 | C | $N_2$ | 15 | 1800 | - | - | - | 30 | 650 | 300 | 0.15 | 720 | 60 |
| Comparative Example 14 | C | $N_2$ | 15 | 1800 | - | - | - | 185 | 650 | 300 | 30 | 720 | 60 |
| Comparative Example 15 | D | - | - | - | - | - | - | - | - | - | - | - | - |

(continued)

| Division | Stee 1 Type | Purge Gas | Gas Flow Rate (m³/hr) | Circulati on fan rpm | One-Step Batch Annealing Application | | | Two-Step Batch Annealing Application | | | | | |
|---|---|---|---|---|---|---|---|---|---|---|---|---|---|
| | | | | | H1 (°C /hr ) | T1 (°C) | t1 (minu te) | H2-1 (°C /hr) | T2-1 (°C) | t2-1 (minu te) | H2-2 (°C /hr) | T2-2 (°C) | t2-2 (mi nute) |
| Inventive Example7 | D | H$_2$ | 25 | 500 | - | - | - | 30 | 650 | 120 | 35 | 720 | 80 |
| Comparative Example 16 | D | H$_2$ | 25 | 5 | - | - | - | 30 | 650 | 120 | 35 | 720 | 80 |

In Table 2 above, H1 denotes one-step batch annealing temperature increase velocity, T1 denotes one-step batch annealing target temperature, t1 denotes one-step batch annealing retention time, H2-1 denotes two-step batch annealing section 1 temperature increase velocity, T2-1 denotes two-step batch annealing section 1 target temperature, t2-1 denotes two-step batch annealing section 1 retention time, H2-2 denotes two-step batch annealing section 2 temperature increase velocity, T2-2 denotes second-step batch annealing section 2 target temperature, and t2-2 denotes second-step batch annealing section 2 retention time.

The steel sheet manufactured in this manner was manufactured as a blank, and then hot-formed using a hot-formed mold to manufacture a hot-formed part. In this case, a heating temperature of the blank was 900°C, the retention time was 5 minutes, and the transfer time from a heating furnace to molding was applied equally to 10 seconds.

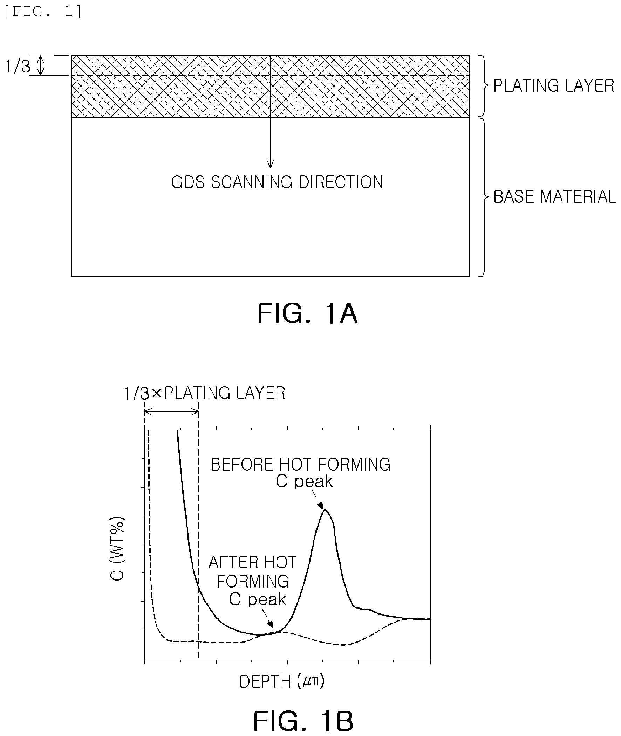

The Surface Carbon Segregation Factor of the hot-formed steel material and the hot-formed part was measured and shown in Table 3 below. For the Surface Carbon Segregation Factor, carbon distribution in a depth direction was measured through a GDS analysis device, and a detailed analysis method is illustrated in FIG. 1. Among the GDS carbon distributions from a 1/3 point of a surface layer comprising a plating layer, the highest carbon amount of the first carbon peak is $C_{peak}$, and $C_{nom}$ is an average carbon amount of each steel type. Meanwhile, in a graph of FIG. 1B, a solid line shows before HPF, and a dotted line shows the carbon distribution after HPF.

Table 3:

| Division | Steel Type | Type of batch annealing | C (peak, before HPF) | C (peak, after HPF) | $C_{nom}$ | Relational Expression 1 | Relational Expression 2 | Whiteness | Fatigue Limit | Fatigue Limit Improvement (%) | Edge Portion Melting |
|---|---|---|---|---|---|---|---|---|---|---|---|
| Comparative Example 1 | A | X | 0 | 0 | 0.085 | 0.00 | 0.00 | - | 275 | 0.0 | X |
| Comparative Example 2 | A | One-step | 0.1 | 0.008 | 0.085 | 1.18 | 0.09 | 66.6 | 277 | 0.7 | X |
| Comparative Example 3 | A | One-step | 0.13 | 0.0243 | 0.085 | 1.53 | 0.29 | 58.5 | 292 | 6.2 | X |
| Comparative Example 4 | A | Two-step | 0.35 | 0.071 | 0.085 | 4.12 | 0.84 | 56.8 | 293 | 6.5 | X |
| Inventive Example1 | A | Two-step | 0.37 | 0.075 | 0.085 | 4.35 | 0.88 | 69.7 | 297 | 8.0 | X |
| Comparative Example 5 | B | X | 0 | 0 | 0.22 | 0.00 | 0.00 | - | 520 | 0.0 | X |
| Comparative Example 6 | B | One-step | 0.53 | 0.11 | 0.22 | 2.41 | 0.50 | 57.9 | 533 | 2.5 | X |
| Inventive Example2 | B | One-step | 0.52 | 0.095 | 0.22 | 2.36 | 0.43 | 71.5 | 567 | 9.0 | O |
| Comparative Example 7 | B | Two-step | 0.45 | 0.087 | 0.22 | 2.05 | 0.40 | 75.1 | 529 | 1.7 | O |
| Inventive Examples | B | Two-step | 0.516 | 0.15 | 0.22 | 2.35 | 0.68 | 75.3 | 571 | 9.8 | X |
| Comparative Example 8 | B | Two-step | 0.54 | 0.158 | 0.22 | 2.45 | 0.72 | 75.4 | 533 | 2.5 | O |
| Comparative Example 9 | B | Two-step | 0.641 | 0.07 | 0.22 | 2.91 | 0.32 | 61.5 | 538 | 3.5 | O |
| Inventive Example4 | B | Two-step | 0.509 | 0.087 | 0.22 | 2.31 | 0.40 | 75.8 | 561 | 7.9 | X |

(continued)

| Division | Steel Type | Type of batch annealing | C (peak, before HPF) | C (peak, after HPF) | C_nom | Relational Expression 1 | Relational Expression 2 | Whiteness | Fatigue Limit | Fatigue Limit Improvement (%) | Edge Portion Melting |
|---|---|---|---|---|---|---|---|---|---|---|---|
| Comparative Example 10 | C | X | 0 | 0 | 0.31 | 0.00 | 0.00 | - | 682 | 0.0 | X |
| Inventive Examples | C | One-step | 1.25 | 0.25 35 | 0.31 | 4.03 | 0.82 | 73.8 | 718 | 5.3 | X |
| Comparative Example 11 | C | One-step | 1.41 | 0.28 59 | 0.31 | 4.55 | 0.92 | 74.0 | 725 | 6.3 | O |
| Comparative Example 12 | C | One-step | 0.12 | 0.02 15 | 0.31 | 0.39 | 0.07 | 74.2 | 689 | 1.0 | X |
| Inventive Example6 | C | Two-step | 1.66 | 0.33 66 | 0.31 | 5.35 | 1.09 | 74.3 | 735 | 7.8 | X |
| Comparative Example 13 | C | Two-step | 1.78 | 0.36 09 | 0.31 | 5.74 | 1.16 | 52.1 | 740 | 8.5 | X |
| Comparative Example 14 | C | Two-step | 1.89 | 0.38 32 | 0.31 | 6.10 | 1.24 | 73.1 | 745 | 9.2 | O |
| Comparative Example 15 | D | X | 0 | 0 | 0.34 5 | 0.00 | 0.00 | - | 803 | 0.0 | X |
| Inventive Example7 | D | Two-step | 1.7 | 0.3447 | 0.345 | 4.93 | 1.00 | 77.2 | 860 | 7.1 | X |
| Comparative Example 16 | D | Two-step | 1.75 | 0.35 48 | 0.34 5 | 5.06 | 1.03 | 77.5 | 862 | 7.1 | O |

In Table 3 above, Relational Expression 1 and Relational Expression 2 were calculated values of $C_{(peak, before\ HPF)}$ / $C_{(nom, before\ HPF)}$ and $C_{(peak, after\ HPF)}$ / $C_{(nom, after\ HPF)}$, respectively.

On the other hand, the whiteness is a value measured using a colorimeter using a tape that is peeled off after being attached to a surface of a material. The fatigue limit is a value derived by repeating compression-tensile tests under specific load conditions, and a fatigue limit improvement rate compared to a material that is not subjected to pre-alloying heat treatment and does not have surface enrichment was expressed as a fatigue limit improvement fraction (%). An edge portion of a pre-alloyed material was observed with an electron microscope to determine whether the edge portion was melted or not, and it was marked with O/X.

As can be seen from Tables 1 to 2 above, in the case of Inventions Examples 1 to 7 that satisfy both the alloy composition and the conditions proposed by the present disclosure, it was confirmed that excellent surface quality and fatigue characteristics could be secured.

Comparative Examples 1, 5, 10 and 15 satisfy the alloy composition proposed in the present disclosure, but do not perform the batch annealing heat treatment, and do not ensure an alloying of the plating layer and the Surface Carbon Segregation Factor.

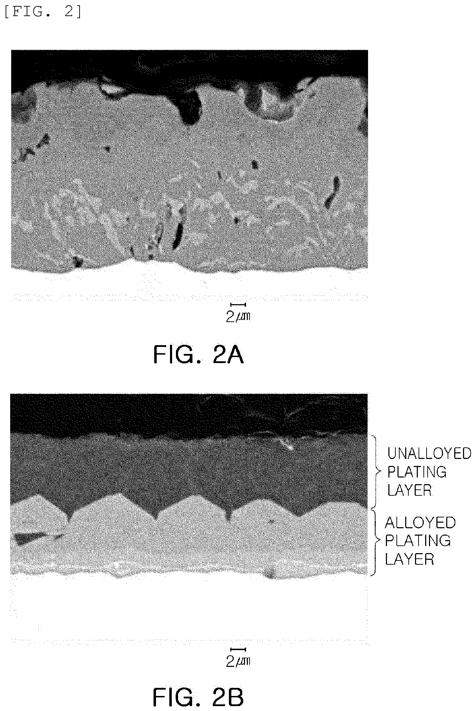

In Comparative Examples 2 and 12, the temperature increase velocity in the batch annealing process was temperature velocity proposed by the present disclosure, but as a heat treatment temperature was less than 500°C, the Surface Carbon Segregation Factor of the steel material before hot forming deviated from the scope of the present disclosure due to the lack of alloying, and thus, the fatigue limit improvement was insignificant. FIGS. 2A and 2B are images obtained by observing cross-sections of the plating layer after the batch annealing heat treatment in Invention Example 1 and Comparative Example 2, respectively. Referring to FIG. 2B, in Comparative Example 2, although the retention time satisfied the conditions presented in the present disclosure, the target temperature was not satisfied, and thus sufficient alloying may not be obtained. On the other hand, in the case of Inventive Example 1 in which all pre-alloying heat treatment conditions were satisfied, it can be confirmed that alloying was completed after an alloying heat treatment.

Comparative Example 3 was a material subjected to batch annealing heat treatment in the one-step, and satisfied a flow rate of the purge gas and driving velocity of the circulation fan, but it was confirmed that the whiteness was less than 60 and was deteriorated due to the formation of a surface oxide at temperature increase velocity of less than 20°C/hr. On the other hand, In Comparative Example 11, the temperature increase velocity exceeded the scope of the present invention, which deteriorated the surface quality due to a plating layer melting phenomenon caused by overheating of the edge portion.

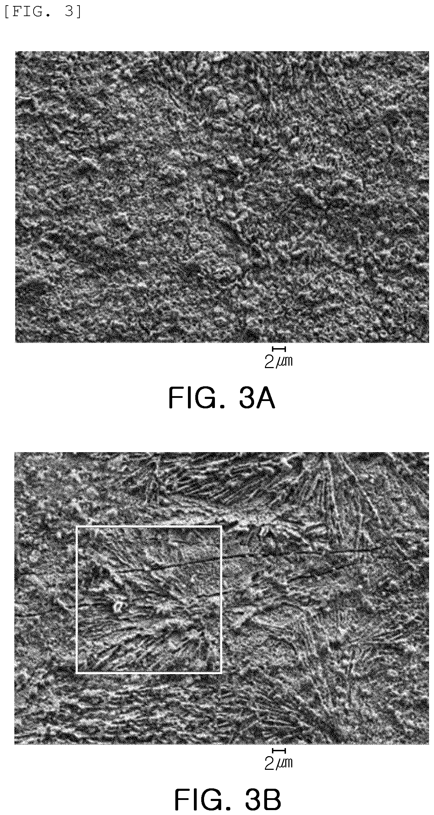

In Comparative Examples 7 and 14, a two-step batch annealing heat treatment was applied, and the temperature increase velocity of the heat treatment in section 1 of two steps exceeded the scope of the present disclosure, and the surface quality was degraded due to a melting phenomenon of the plating layer caused by overheating of the edge portion due to an excessive heat treatment. FIGS. 3A and 3B are images obtained by observing Inventive Example 2 and Comparative Example 7 with an optical microscope, respectively, and as compared to Inventive Example 2 of FIG. 3A, in Comparative Example 7 of FIG. 3B, it was confirmed that a phenomenon (box part) in which the surface quality is not homogeneous due to solidification after melting the plating layer occurred at the edge portion.

In each of Comparative Examples 8 and 13, the temperature increase velocity of section 2 in a second-step batch annealing heat treatment process exceeds or falls short of the scope of the present disclosure, and it was confirmed that a plating layer was melted at each edge portion, or the surface quality was degraded with a whiteness of less than 60.

In Comparative Examples 4 and 6, the temperature increase velocity and the retention time were satisfied, but the flow rate of the purge gas does not satisfy the scope of the present disclosure, and sufficient surface whiteness was not secured. In Comparative Examples 9 and 16, the circulation fan in a furnace operated at less than 10 rpm during the batch annealing heat treatment, and it was confirmed that due to the powdery day of the temperature in the furnace, it was confirmed that due to the non-uniformity of the temperature in the furnace, the surface quality was degraded due to the melting phenomenon of the plating layer due to overheating of the edge portion.

**Claims**

1. A steel material for hot forming, comprising:

   a base steel sheet; and
   a plating layer formed on the base steel sheet,
   wherein the base steel sheet comprises: by wt%, C: 0.04 to 0.45%, Si: 1.5% or less (excluding 0%), Mn: 0.2 to 2.5%, P: 0.05% or less, S: 0.02% or less, Al: 0.01 to 0.1%, Cr: 0.01 to 5.0%, N: 0.02% or less, residual Fe, and inevitable impurities, and
   the following Relational Expression 1 is satisfied, [Relational Expression 1]

Carbon segregation index before hot forming:

$$C_{(peak, before\ HPF)} / C_{(nom, before\ HPF)} \geq 1.5$$

where $C_{(peak,\ before\ HPF)}$ is the highest carbon value of a carbon peak that appears first in a carbon profile as a result of GDS analysis, in a direction of the base steel sheet from a 1/3 point of a thickness of the plating layer on a surface, and $C_{(nom,\ before\ HPF)}$ is a nominal carbon value of steel.

2. The steel material for hot forming of claim 1, wherein the base steel sheet comprises at least one of Mo: 0.5% or less, Ni: 0.5% or less, Nb: 0.1% or less, Ti: 0.1% or less, and B: 0.01% or less.

3. The steel material for hot forming of claim 1, wherein a microstructure of the base steel sheet comprises, by an area fraction, 50 to 90% of ferrite, and comprises at least one of 30% or less of pearlite, 20% or less of bainite, and 20% or less of martensite.

4. The steel material for hot forming of claim 1, wherein a whiteness of the steel material for hot forming is 60 or more.

5. A method for manufacturing a steel material for hot forming, the method comprising:

obtaining a plated steel sheet using a steel slab comprising, by wt%, C: 0.04 to 0.45%, Si: 1.5% or less (excluding 0%), Mn: 0.2 to 2.5%, P: 0.05%, S: 0.02% or less, Al: 0.01 to 0.1%, Cr: 0.01 to 5.0%, N: 0.02% or less, residual Fe, and inevitable impurities, and
performing batch annealing on the plated steel sheet in a one-step manner of the following batch annealing condition 1,
[Batch Annealing Condition 1]
Temperature range (T1): 500 to 800°C
Retention time (t1): 1 minute or more (retention time at a target temperature)
Temperature increase velocity (H1): 20 to 160°C/hr (temperature increase velocity to a target temperature).

6. A method for manufacturing a steel material for hot forming, the method comprising:

obtaining a plated steel sheet using a steel slab comprising, by wt%, C: 0.04 to 0.45%, Si: 1.5% or less (excluding 0%), Mn: 0.2 to 2.5%, P: 0.05% or less, S: 0.02% or less, Al: 0.01 to 0.1%, Cr: 0.01 to 5.0%, N: 0.02% or less, residual Fe, and inevitable impurities, and
performing batch annealing on the plated steel sheet in a two-step manner of the following batch annealing condition 2],
[Batch Annealing Condition 2]
Temperature range of section 1 (T2-1): 500 to 780°C
Retention time of section 1 (t2-1) : 1 minute or more (retention time at a target temperature)
Temperature increase velocity of section 1 (H2-1): 20 to 160°C/hr (temperature increase velocity to a target temperature)
Temperature range of section 2 (T2-2): 600 to 800°C
Retention time of section 2 (t2-2): 50 minutes or more (retention time at a target temperature)
Temperature increase velocity of section 2 (H2-2): 0.25 to 160°C/hr (temperature increase velocity to a target temperature).

7. The method for manufacturing a steel material for hot forming of claim 5 or 6, wherein the steel slab further comprises at least one of Mo: 0.5% or less, Ni: 0.5% or less, Nb: 0.1% or less, Ti: 0.1% or less, and B: 0.01% or less.

8. The method for manufacturing a steel material for hot forming of claim 5 or 6, wherein purge gas in a furnace during the batch annealing is one of hydrogen ($H_2$), nitrogen ($N_2$), and a mixture thereof, and a purge amount is 0.1 to 100 m$^3$/hr.

9. The method for manufacturing a steel material for hot forming of claim 5 or 6, wherein a circulation fan may operate during the batch annealing, and an amount of operation of the circulation fan is 10 rpm or more.

10. The method for manufacturing a steel material for hot forming of claim 5 or 6, wherein the obtaining a plated steel sheet comprises:

heating the steel slab at 1050 to 1300°C;
obtaining a hot-rolled steel sheet by finish hot rolling the heated steel slab at 800 to 950°C;
winding the hot-rolled steel sheet at 500 to 700°C;
cooling the wound hot-rolled steel sheet from a winding temperature to 400°C at cooling velocity of 10 °C/Hr or more;
obtaining a cold-rolled steel sheet by cold rolling the cooled hot-rolled steel sheet at a reduction rate of 30 to 80%;
heating the cold-rolled steel sheet at a temperature range from 400°C to an annealing temperature at velocity of 20°C/s or less;
annealing the heated cold-rolled steel sheet at an annealing temperature of 740 to 860°C;
cooling the annealed cold-rolled steel sheet from an annealing temperature to 660°C at cooling velocity of 1 °C/s or more; and
performing plating after the annealing.

11. The method for manufacturing a steel material for hot forming of claim 10, wherein a dew point temperature of an atmospheric gas during the annealing is -70 to -30°C.

12. The method for manufacturing a steel material for hot forming of claim 10, wherein an aluminum plating layer is formed by immersing the plating in an Al-based plating bath comprising, by wt%, Si: 6 to 12%, Fe: 1 to 4%, residual Al, and inevitable impurities.

13. A hot formed part, comprising:

a base material comprising, by wt%, C:0.04 to 0.45%, Si: 1.5% or less (excluding 0%), Mn:0.2 to 2.5%, P:0.05% or less, S:0.02% or less, Al: 0.01 to 0.1%, Cr: 0.01 to 5.0%, N:0.02% or less, residual Fe, and inevitable impurities; and
a plating layer comprised on the base material,
wherein the following Relational Expression 2 are satisfied,

$$[\text{Relational Expression 2}]$$

$$C_{(peak,\ after\ HPF)} / C_{(nom,\ after\ HPF)} \geq 0.1$$

where $C_{(peak,\ after\ HPF)}$ is the highest carbon value of a carbon peak that appears first in a carbon profile as a result of GDS analysis in a direction of a base steel sheet from a 1/3 point of a thickness of a plating layer on a surface, and $C_{(nom,\ after\ HPF)}$ is a nominal carbon value of steel.

14. The hot formed part of claim 13, wherein the base material comprises at least one of Mo: 0.5% or less, Ni: 0.5% or less, Nb: 0.1% or less, Ti: 0.1% or less, and B: 0.01% or less.

15. The hot formed part of claim 13, wherein a microstructure of the hot formed part is a martensitic single-phase structure or a mixed structure of martensite and 40% by area or less of bainite.

16. The hot formed part of claim 13, wherein a value of the Relational Expression 2 is 1.0 or less.

17. The hot formed part of claim 13, wherein a fatigue limit of the hot formed part is 5% or more.

18. The hot formed part of claim 13, wherein the hot formed part is manufactured using the steel material for hot forming of one of claims 1 to 4.

19. A method for manufacturing a hot formed part, the method comprising:

obtaining a blank using the steel material for hot forming of one of claims 1 to 4;

heating the blank to a temperature between an Ac3 temperature and 980°C and maintaining the blank for 1 to 1000 seconds; and
hot forming and cooling the heated and maintained blank.

20. The method for manufacturing a hot formed part, wherein the cooling is performed by a mold cooling method.

[FIG. 1]

1/3

PLATING LAYER

GDS SCANNING DIRECTION

BASE MATERIAL

# FIG. 1A

1/3×PLATING LAYER

C (WT%)

BEFORE HOT FORMING
C peak

AFTER HOT
FORMING
C peak

DEPTH (μm)

# FIG. 1B

[FIG. 2]

FIG. 2A

UNALLOYED
PLATING
LAYER

ALLOYED
PLATING
LAYER

FIG. 2B

[FIG. 3]

FIG. 3A

FIG. 3B

| INTERNATIONAL SEARCH REPORT | International application No. |
|---|---|
| | **PCT/KR2022/017875** |

**A. CLASSIFICATION OF SUBJECT MATTER**

**C22C 38/38**(2006.01)i; **C22C 38/06**(2006.01)i; **C22C 38/00**(2006.01)i; **C22C 38/58**(2006.01)i; **C22C 38/44**(2006.01)i; **C22C 38/48**(2006.01)i; **C22C 38/50**(2006.01)i; **C22C 38/54**(2006.01)i; **C21D 8/02**(2006.01)i

According to International Patent Classification (IPC) or to both national classification and IPC

**B. FIELDS SEARCHED**

Minimum documentation searched (classification system followed by classification symbols)

C22C 38/38(2006.01); B21B 1/24(2006.01); B21D 35/00(2006.01); C21D 8/02(2006.01); C21D 9/46(2006.01); C21D 9/663(2006.01); C22C 38/00(2006.01); C22C 38/34(2006.01); C23C 2/28(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 열간성형(hot forming), 도금강판(plated steel sheet), 상소둔(batch annealing), 도금층(plated layer), 탄소(carbon)

**C. DOCUMENTS CONSIDERED TO BE RELEVANT**

| Category* | Citation of document, with indication, where appropriate, of the relevant passages | Relevant to claim No. |
|---|---|---|
| X | KR 10-2021-0028627 A (POSCO) 12 March 2021 (2021-03-12)<br>See paragraph [0084] and claims 1-2 and 4-6. | 1-2,4-7 |
| Y | | 3,8-20 |
| Y | KR 10-2021-0080239 A (POSCO) 30 June 2021 (2021-06-30)<br>See paragraph [0125] and claims 3, 7, 12, 15-17 and 19. | 3,10-20 |
| Y | US 5380378 A (HEMSATH, Klaus H.) 10 January 1995 (1995-01-10)<br>See column 7, lines 22-34, column 8, lines 23-38 and column 9, lines 38-50. | 8-9 |
| A | KR 10-2018-0074292 A (POSCO) 03 July 2018 (2018-07-03)<br>See paragraphs [0105]-[0109] and claims 1-5 and 9. | 1-20 |
| A | JP 2016-003389 A (KOBE STEEL LTD.) 12 January 2016 (2016-01-12)<br>See claims 1 and 5. | 1-20 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **16 February 2023** | **17 February 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/017875**

| Patent document cited in search report | | | Publication date (day/month/year) | Patent family member(s) | | | Publication date (day/month/year) |
|---|---|---|---|---|---|---|---|
| KR | 10-2021-0028627 | A | 12 March 2021 | CN | 113166910 | A | 23 July 2021 |
| | | | | EP | 3889311 | A1 | 06 October 2021 |
| | | | | JP | 2022-513651 | A | 09 February 2022 |
| | | | | KR | 10-2227111 | B1 | 12 March 2021 |
| | | | | US | 2021-0395872 | A1 | 23 December 2021 |
| | | | | WO | 2020-111648 | A1 | 04 June 2020 |
| KR | 10-2021-0080239 | A | 30 June 2021 | CN | 114867883 | A | 05 August 2022 |
| | | | | EP | 4079913 | A1 | 26 October 2022 |
| | | | | KR | 10-2021-0080158 | A | 30 June 2021 |
| | | | | KR | 10-2379443 | B1 | 29 March 2022 |
| | | | | KR | 10-2469278 | B1 | 22 November 2022 |
| | | | | US | 2023-0002873 | A1 | 05 January 2023 |
| | | | | WO | 2021-125878 | A1 | 24 June 2021 |
| US | 5380378 | A | 10 January 1995 | US | 5388809 | A | 14 February 1995 |
| KR | 10-2018-0074292 | A | 03 July 2018 | KR | 10-1879104 | B1 | 16 July 2018 |
| JP | 2016-003389 | A | 12 January 2016 | WO | 2015-194571 | A1 | 23 December 2015 |

Form PCT/ISA/210 (patent family annex) (July 2022)

**EP 4 455 344 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6296805 B
- KR 101129370
- KR 100373280